# EUROPEAN PATENT APPLICATION

(11) **EP 4 811 267 A1**
(43) Date of publication of application: **23.09.2026**
(21) Application number: 24918606.5
(22) Date of filing: 30.08.2024
(51) Int. Cl.: G06Q 50/10

(54) **HUMAN INFORMATION MANAGEMENT SYSTEM**

(30) Priority: 19.01.2024 JP 2024006901
(71) Applicant: Liberal Arts Technology Inc., Okaya-shi, Nagano 394-0025 (JP)
(72) Inventor: NAGATA Masaki, Tokyo 158-0083 (JP)
(74) Representative: Prüfer & Partner mbB Patentanwälte · Rechtsanwälte
(86) International application number: PCT/JP2024/031124
(87) International publication number: WO 2025/154318

(57) **Abstract**

Provided is a human information management system that can improve the reliability of various kinds of human information while increasing the amount of human information that can be used by a system. A human information management system according to the present invention comprises: an input information recording means for recording, as input information, human information input by a user using a user terminal; an information reliability evaluation means for evaluating the reliability of the input information for each information unit and deriving a reliability index associated with the corresponding information unit; and a browsing information disclosure means for disclosing, to the user, browsing disclosure information formed on the basis of the input information or integrated information generated by integrating a plurality of pieces of the input information.

## Description

### Technical Field

The present invention relates to a human information management system.

### Background Art

Conventionally, information viewing systems have been proposed which are configured to store personal information such as family tree information and messages and various other kinds of human information, and to transmit the above-mentioned human information to descendants and other related persons. Each of Patent Documents 1 to 5 below is a system which stores various kinds of human information mainly including the above-mentioned personal information and manages the stored information so as to be viewable by other persons as well.

In each of the above-mentioned systems, human information is received from a user, some processing is added to the received human information, and the processed human information is made viewable by another user, while in actual operation of the system, there is a need to consider the disclosure range of the human information and protection of personal information, and there is thus a problem of how to manage the above-mentioned various kinds of human information. To address these matters, Patent Document 6 and Patent Document 7 below allow the user to set persons to whom disclosure is made and, in addition, to set a disclosure range of human information, and information is disclosed according to the settings.

### Prior Art

### Patent Documents

Patent Document 1: Pre-Grant Patent Publication No. 2002-015057
Patent Document 2: International Publication No. WO 2004/066174
Patent Document 3: Pre-Grant Patent Publication No. 2015-090539
Patent Document 4: Pre-Grant Patent Publication No. 2018-160005
Patent Document 5: Pre-Grant Patent Publication No. 2022-183722
Patent Document 6: Pre-Grant Patent Publication No. 2001-297159
Patent Document 7: Pre-Grant Patent Publication No. 2023-109195

### Summary of Invention

### Technical Problem

In the above-mentioned systems, in managing various kinds of human information obtained from the user, ensuring the accuracy of the human information and performing identity verification are important for securing the reliability of the human information. Yet, when an attempt is made to increase the reliability of the human information, the amount of obtainable information and the amount of disclosable information decrease, and the attractiveness as a viewing system for various kinds of human information is lost. Conversely, when an attempt is made to secure a sufficient amount of human information, the quality of the human information becomes difficult to ensure, such as erroneous information being disclosed more frequently, and as a result the reliability of the entire system may be lost.

Accordingly, the present invention solves the above-mentioned problem, and an object of the present invention is to realize a human information management system capable of improving the reliability of various kinds of human information while increasing the amount of human information usable in the system.

### Solution to Problem

To solve the above-mentioned problem, a human information management system according to the present invention includes: input information recording means which records, as input information, human information input by a user; information reliability evaluation means which evaluates reliability of the input information for each information unit and derives a reliability indicator associated with the corresponding information unit; and viewing information disclosure means which discloses, to the user, disclosed information for viewing formed from the input information or from integrated information generated by integrating a plurality of pieces of the input information.

According to the present invention, human information input by the user is recorded as input information by the input information recording means. Further, the reliability of the input information is evaluated for each information unit by the information reliability evaluation means, and the reliability indicator is derived. Accordingly, management of the input information and the integrated information can be performed on the basis of the reliability indicator derived for each information unit of the input information. Therefore, occurrence of problems caused by erroneous information can be suppressed without hindering broadening of the range of human information to be provided. Here, the human information broadly encompasses various kinds of information including information on the user himself/herself (self information), information on another person (other-person information), and relationships between persons (interpersonal relationship information).

In the present invention, the information reliability evaluation means preferably sets the level of the reliability indicator according to the degree of consistency of the corresponding information unit with other information units in the input information and with the existing human information. In this case, when a part of the input information does not match the existing human information, the information reliability evaluation means preferably lowers the reliability indicator of the part, and when the part matches the existing human information, the information reliability evaluation means desirably raises the reliability indicator of the part. In addition, the level of the reliability indicator is preferably set according to the existence, or the presence or absence, of certification documents by a third party which prove the corresponding information unit. Here, examples of certification documents by a third party include a certificate of all matters in a family register (family register transcript), a registered matters certificate, and a DNA typing appraisal certificate. When a part of the input information is proved by certification documents by a third party which have been submitted, the information reliability evaluation means desirably raises the reliability indicator of the part.

In the present invention, the viewing information disclosure means preferably forms the disclosed information for viewing with the reliability indicator added on the basis of the input information or the integrated information. According to this configuration, since the disclosed information for viewing is formed with the reliability indicator added, the viewer can view the information unit while checking the reliability indicator, and therefore the influence of erroneous information on the viewer can be reduced.

In the present invention, the viewing information disclosure means preferably forms the disclosed information for viewing by selecting or limiting the input information or the integrated information for each of the information unit according to the level of the reliability indicator. According to this configuration, the disclosed information for viewing is formed by selecting or limiting the input information or the integrated information for each information unit according to the level of the reliability indicator, and therefore the reliability of the disclosed information for viewing is improved overall, whereby a decrease in reliability of the system can be prevented.

In the present invention, the human information management system preferably further includes integrated information generation means which generates the integrated information from a plurality of pieces of the input information. Here, in a case where a part of the input information matches the existing human information and the remaining part includes non-common information for which no mutually corresponding data portion exists, the integrated information is desirably generated in a mode including the non-common information in addition to the part. Further, in the integrated information, when a part of the input information does not match the existing human information, the part and a corresponding part of the existing human information preferably coexist.

In this case, the integrated information is preferably generated by selecting or limiting and integrating the input information for each of the information unit according to the level of the reliability indicator. According to this configuration, integrated information is generated by selecting or limiting and integrating the input information of a plurality of users for each information unit according to the level of the reliability indicator. Since the integrated information is thus generated in a mode in which the reliability of the human information input by the users is improved overall, a wide range of human information can be integrated while avoiding a decrease in reliability. Accordingly, both broadening of the human information to be provided and reduction of erroneous information can be achieved. Here, in the integrated information, when a part of the input information does not match the existing human information, the reliability indicator of the part and the reliability indicator of a corresponding part of the existing human information are compared, only the one having the higher reliability indicator is desirably retained when the difference in level of the reliability indicator is equal to or greater than a threshold, and the part and the corresponding part desirably coexist when the difference is less than the threshold.

The integrated information is desirably generated with the reliability indicator added for each of the information unit. According to this configuration, since the integrated information is generated with the reliability indicator added, the information unit can be grasped while checking the reliability indicator, and therefore the influence of erroneous information in the integrated information can be reduced.

In the present invention, the information reliability evaluation means preferably defines, as the reliability indicator, a plurality of information reliability ranks ranging from high reliability to low reliability, and uses one of intermediate ranks excluding the highest rank and the lowest rank among the plurality of information reliability ranks as an initial value of the information reliability ranks. For example, as in an embodiment described below, in a case where seven information reliability ranks are A, B, C, D, E, F, and G, one of intermediate ranks B to F is preferably used as the initial value, and in particular a middle rank such as D is desirably used as the initial value.

In the present invention, the viewing information disclosure means desirably restricts the disclosure range of the input information in response to an operation by the user. Further, the disclosure range desirably consists of a range of viewers to be disclosure targets, a range of information to be disclosure contents, and a temporal range to be a disclosure period. Furthermore, when parts of input information from a plurality of users match each other, the disclosure range of the parts is desirably determined by adjusting the parts according to a relationship among settings of the disclosure range for the respective users.

In the present invention, the human information management system preferably further includes a long-term data management unit having a plurality of recording sections for recording the input information or the integrated information, the long-term data management unit being composed of a plurality of mutually different types of storage media and including at least a first recording section which is more suitable for recording changes than other recording sections and a second recording section which is more suitable for long-term storage than other recording sections. The long-term data management unit preferably records the record data of information units having low reliability indicators in the first recording section and records the record data of information units having high reliability indicators in the second recording section.

### Advantageous Effects of Invention

According to the present invention, a human information management system can be realized which can improve the reliability of various kinds of human information while increasing the amount of human information usable in the system.

### Brief Description of Drawings

[FIG. 1] is a schematic configuration diagram illustrating an example of an overall configuration of an embodiment of a human information management system according to the present invention.
[FIG. 2] is a schematic flowchart illustrating an example of a processing procedure of an information reliability evaluation means in the embodiment.
[FIG. 3] is a schematic flowchart illustrating an example of a processing procedure of an integrated information generation means in the embodiment.
[FIG. 4] is a schematic flowchart illustrating an example of a processing procedure of a disclosure range setting means in the embodiment.
[FIG. 5] is a schematic configuration diagram illustrating an example of a selection structure of a registration input screen relating to an input information recording means and a viewing display screen by a viewing information disclosure means, the screens being displayed on a user terminal in the embodiment.
[FIG. 6] is a schematic flowchart illustrating an example of processing procedures in the respective screens shown in FIG. 5 in the embodiment.
[FIG. 7] is a schematic flowchart illustrating details of an example of a processing procedure executed on the above-mentioned viewing display screen in the embodiment.
[FIG. 8] is a schematic correspondence table illustrating an example of a relationship between information types and reliability indicators in the embodiment.
[FIG. 9] is a schematic correspondence table illustrating an example of a relationship between information types and disclosure range information in the embodiment.
[FIG. 10] is a schematic diagram illustrating an example of a family tree.
[FIG. 11] is a schematic diagram illustrating another example of a family tree.
[FIG. 12] is a schematic diagram illustrating an example of an interaction diagram.
[FIG. 13] is a schematic diagram illustrating another example of an interaction diagram.

### Description of Embodiments

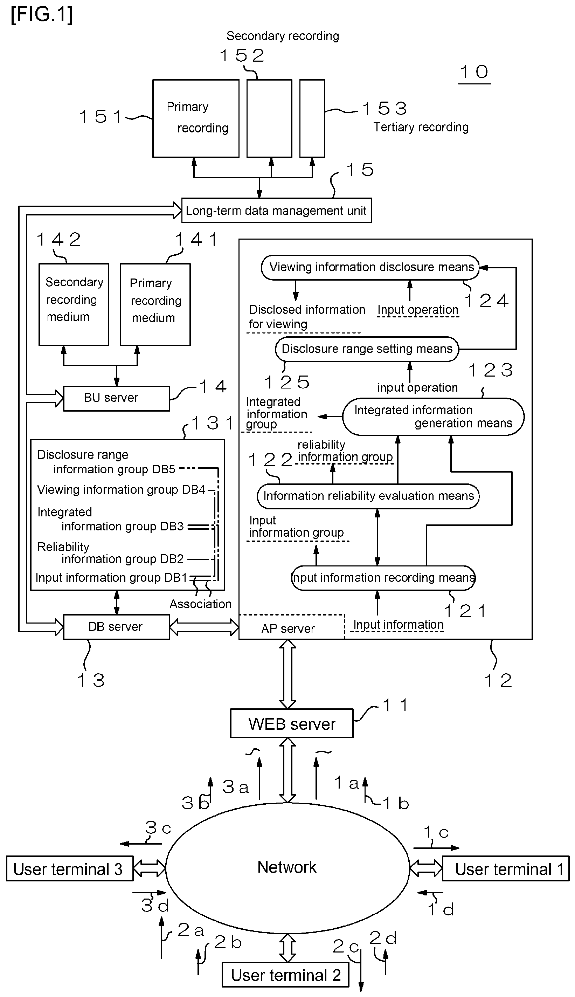

Next, an embodiment of a human information management system according to the present invention will be described in detail with reference to the accompanying drawings. First, an overall configuration of the embodiment of the human information management system according to the present invention will be described with reference to FIG. 1.

FIG. 1 is a schematic configuration diagram for explaining an overall configuration of a human information management system 10. The system 10 includes a WEB (web) server 11 which is connected to a network and executes exchange of input/output data with a user terminal, an AP (application) server 12 which is connected to the WEB server 11 and executes processing of the above-mentioned input/output data, and a DB (database) server 13 which exchanges recorded data with the AP server 12 and executes storage and management of data. Since the above-mentioned WEB server 11 and DB server 13 perform ordinary server operations, detailed description will be omitted.

The AP server 12 executes various kinds of data processing, for example, conversion, storage, updating, deletion, and setting of data, in accordance with various application programs. The AP server 12 constitutes an input information recording means 121, an information reliability evaluation means 122, an integrated information generation means 123, a viewing information disclosure means 124, and a disclosure range setting means 125.

The input information recording means 121 receives input information 1a, 2a, and 3a consisting of human information input from the user terminals 1-3, and records the input information 1a, 2a, and 3a in a recording section (storage) 131 by the DB server 13 as at least a part of an input information group DB1 consisting of bundles of input information for respective users. The human information in the input information 1a, 2a, and 3a includes self information, which is information of the user himself/herself, other-person information, which is information relating to a person other than the user, first interpersonal relationship information, which indicates a relationship between the subject user and another person, and second interpersonal relationship information, which indicates a relationship between other persons. Although the illustrated example shows three user terminals, the number of user terminals is merely illustrative, no particular limitation is imposed on the number of users, and the number of terminals which are connectable simultaneously also depends on the setting of the system. In the following description, explanation will be made on the assumption that any one user terminal is connected at any given point in time.

The information reliability evaluation means 122 evaluates reliability of the input information 1a, 2a, and 3a obtained from the above-mentioned input information group DB1 or the input information recording means 121. The evaluation of the information reliability is executed by evaluating reliability of the above-mentioned input information 1a, 2a, and 3a for each information unit and deriving a reliability indicator. In the present embodiment, as the reliability indicator, a plurality of information reliability ranks indicating higher and lower levels of information reliability are defined, and one of the plurality of information reliability ranks is assigned to each information unit. The information reliability ranks will be described below. The reliability indicator is assigned to each information unit of the input information 1a, 2a, and 3a and is recorded in the recording section 131 by the DB server 13 as at least a part of a reliability indicator group DB2. The reliability indicator is associated (linked) with a corresponding information unit of the input information by a management number or the like. Further, the reliability indicator is preferably also associated (linked) with a corresponding information unit of integrated information described below. In the above-mentioned information reliability evaluation means 122 of the present embodiment, the reliability indicator is derived for each information unit of the input information, while processing for deriving the reliability indicator for each information unit of existing input information already stored may be executed later, and processing for deriving the reliability indicator for each information unit of integrated information described below may also be executed.

The integrated information generation means 123 generates an integrated information group DB3, which is obtained by integrating the input information 1a, 2a, and 3a obtained from a plurality of users, on the basis of the above-mentioned input information 1a, 2a, and 3a obtained from the input information group DB1 or the input information recording means 121 and the reliability indicators obtained from the above-mentioned reliability indicator group DB2 or the information reliability evaluation means 122, and records the integrated information group DB3 in the recording section 131 by the DB server 13. The integrated information group DB3 is configured not as individual human information such as the input information 1a, 2a, and 3a for each user but as general human information shared by the system, the general human information preferably being separated from the users and being obtained as a result of integrating input information obtained from a plurality of users. The integrated information group DB3 is generated by an integration process which integrates the above-mentioned input information 1a, 2a, and 3a in accordance with unified rules. The integration process will be described below. The integrated information group DB3 is a bundle of pieces of integrated information which are integrally associated with each other, and ideally the whole of the integrated information group DB3 becomes integrally associated information, while a mode is usually adopted in which a plurality of groups of integrated information which are not associated with each other (mutual relevance, namely information links, being disconnected) coexist.

The viewing information disclosure means 124 generates disclosed information for viewing on the basis of human information obtained from the above-mentioned input information group DB1 or the input information 1a, 2a, and 3a, or human information obtained from the above-mentioned integrated information group DB3 or individual pieces of integrated information, the above-mentioned reliability indicator group DB2 or the reliability indicators obtained from the information reliability evaluation means 122, and individual pieces of disclosure range information obtained from a disclosure range information group DB5 or the disclosure range setting means 125 described below, and makes the above-mentioned disclosed information for viewing viewable on the user terminals 1-3 via the WEB server 11. The information disclosure operation of the viewing information disclosure means 124 is executed on the basis of input operations 1b, 2b, and 3b performed by the respective users via the user terminals 1-3. The disclosed information for viewing disclosed in response to the input operations 1b, 2b, and 3b is sent to the user terminals 1-3 as output data 1c, 2c, and 3c. Here, the above-mentioned disclosed information for viewing is recorded in the recording section 131 by the DB server 13 as at least a part of a disclosed information for viewing group DB4.

The disclosure range setting means 125 sets a disclosure range for the input information 1a, 2a, and 3a in accordance with input operations 1d, 2d, and 3d by the respective users input on the user terminals 1-3. The disclosure range is set for each information unit of the input information. Details of the disclosure range will be described below, and a range of viewers to be disclosure targets, a range of information to be disclosed, and a temporal range to be a disclosure period are set for each information unit. Setting information relating to the various disclosure ranges is recorded in the recording section 131 by the DB server 13 as at least a part of a disclosure range information group DB5.

In the system 10, a BU (backup) server 14 may be provided, as necessary. The BU server 14 backs up the above-mentioned various kinds of information recorded in the recording section 131 through exchange with the DB server 13. In the illustrated example, the BU server 14 preferably records backup data by using a primary recording medium (a certain type of storage) 141 and a secondary recording medium (another type of storage) 142. For example, for the primary recording medium 141, a storage having high processing speed is used for information having high access frequency, and for the secondary recording medium 142, a storage which is less likely to deteriorate even during long-term storage is used for information having low access frequency. Examples of the storage include flash memory, optical disk, magnetic disk, magnetic tape, and the like. When the BU server 14 is configured as a long-term data management unit, the primary recording medium 141 is used as a first recording section and the secondary recording medium 142 is used as a second recording section. The data respectively backed up in the first recording section and the second recording section can function in place of the long-term data management unit 15 described below by recording, in the first recording section, data of information units having low reliability indicators for respective information units described below and recording, in the second recording section, data of information units having high reliability indicators.

Further, in the system 10, separately from the BU server 14 or in place of the BU server 14, a long-term data management unit 15 is preferably additionally provided. As described below, the system 10 is configured such that descendants can view information indicating human relationships, such as family trees, interaction diagrams, and other interpersonal relationship diagrams, which constitutes human information input by the users, and information relating to ancestors, such as messages, diaries, photographs, and personal histories of deceased persons, and therefore long-term storage and management of the above-mentioned various kinds of human information are necessary. For this reason, the long-term data management unit 15 is configured such that information recorded in the above-mentioned recording section 131, the primary recording medium 141, and the secondary recording medium 142 can be reliably stored over a long period. In the illustrated example, a primary recording section 151, a secondary recording section 152, and a tertiary recording section 153 are provided. The primary recording section 151 (corresponding to the above-mentioned first recording section) basically records all information, while among the recorded information, information having high reliability of content and a low possibility of change in content is also recorded in the secondary recording section 152. Among the information recorded in the secondary recording section 152, information having still higher reliability of content and a still lower possibility of change in content is recorded in the tertiary recording section 153 (corresponding to the above-mentioned second recording section), for which rewriting is difficult while long-term storage is reliable. Such a hierarchical recording mode is not limited to a tertiary mode and may be a secondary configuration, and a configuration of fourth order or higher may also be provided. In a higher-order recording section such as the tertiary recording section 153 (corresponding to the second recording section), a recording means capable of withstanding long-term recording is used. Examples of such a recording means include methods such as engraving on a hard material. For example, by writing information into a hard-material plate such as quartz by using MEMS (microfabrication technology) such as laser engraving, semi-permanent retention of information recording becomes possible, rather than a mode in which recorded content is lost over time as in magnetic recording media and the like.

In the long-term data management unit 15, in a hierarchical recording section structure including the primary recording section 151, the secondary recording section 152, and the tertiary recording section 153, among information to be stored, record units provided with the above-mentioned reliability indicators of high information reliability are preferentially stored also in a higher-order recording section (the second recording section). Such storage is performed since higher information reliability reduces the necessity for rewriting the information. Further, not only information units provided with high reliability indicators but also information which is unlikely to undergo change or fluctuation in content in the future, such as when the user is already deceased, is preferentially stored also in the higher-order recording section (the second recording section). According to such a configuration, information which has high information reliability and is unlikely to fluctuate in the future can be efficiently and reliably stored for a long period, and therefore the system 10 can be maintained semi-permanently while suppressing an increase in management cost.

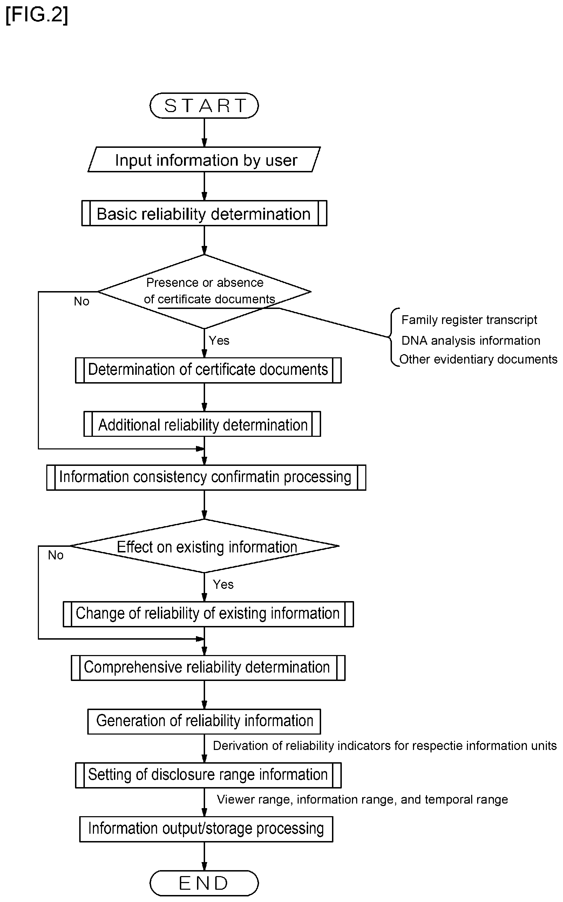

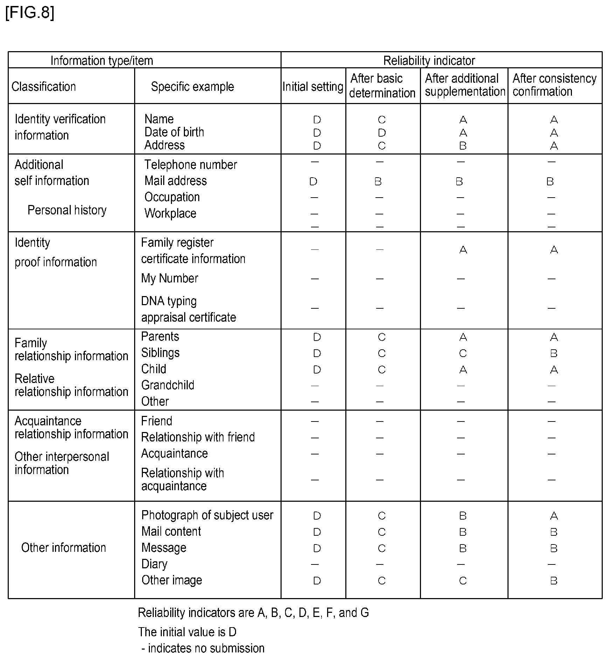

Next, with reference to FIG. 2, an example of a specific processing procedure of the above-mentioned information reliability evaluation means 122 will be described. In this example, first, reliability of information is evaluated upon receipt of input information (1a, 2a, 3a) from the user. An example of the input information is shown in FIG. 8. Among the input information shown in FIG. 8, the reliability indicator is set for each information unit which is a specific example in a right column belonging to a classification in a left column of information type/item. In this specific example, as the reliability indicator, a plurality of information reliability ranks A-G (specifically, seven ranks) indicating higher and lower levels of information reliability are defined. In the order of A, B, C, D, E, F, and G, the earlier the alphabetic order, the higher the reliability, and the later the alphabetic order, the lower the reliability. The initial value (initial setting) of the information reliability rank is preferably an intermediate rank, and in the present embodiment, the initial value is D, which is a rank further located at the center among the intermediate ranks, namely a center rank.

In FIG. 8, identity verification information, additional self information, and identity proof information are shown as self information among the input information. The identity verification information is information for specifying the subject user, and examples include name, date of birth, and address. Further, examples of the additional self information include telephone number, mail address, occupation, workplace, and the like. Further, examples of the identity proof information include family register certificate documents such as a certificate of all matters in a family register (family register transcript) (in the case of a corporation, a registered matters certificate), My Number information, a DNA typing appraisal certificate, and the like. Certificates issued by a chamber of commerce and industry, the national government, or local public bodies are also included. Examples of the first interpersonal relationship information among the input information include family relationship information, relative relationship information, acquaintance relationship information, and the like. In the first interpersonal relationship information, matters indicating a relationship with the subject user, such as kinship, are principal matters. In addition to the relationship with the subject user, information on the related person himself/herself, for example, information such as date of birth, gender, occupation, and address, may accompany the relationship, or interpersonal relationship information such as a kinship description (for example, niece) may result in clarification of information relating to other-person information (for example, female). Further, second interpersonal relationship information which indicates a relationship between another person and a different another person may also be included. The input information is not limited to the above-mentioned information and may include various other kinds of information such as a photograph of the subject user, mail content, a message, diary content, and other images. Of course, with respect to the various other pieces of information, the above-mentioned other pieces of information corresponding to family members or acquaintances other than the subject user may also be included.

In FIG. 8, information units provided by the above-mentioned input information are marked with information reliability rank D, and information units which are not input are marked with -. Next, a basic reliability determination is carried out for the input information. In the basic reliability determination, mutual relationships among a plurality of information units (specific examples) within the input information 1a, 2a, and 3a are closely examined, and a determination is made as to whether inconsistency exists among a plurality of information units which are mutually related. When no inconsistency exists among the mutually related information units, the information reliability rank for the plurality of information units is upgraded to a higher rank, for example, C. When inconsistency exists among the mutually related information units, the information reliability rank for the plurality of information units is downgraded to a lower rank, for example, E. For information units having no mutual relationship with other information units, the initial value D is maintained. Each information reliability determination process, beginning with the basic reliability determination, may be executed in accordance with a specific determination program, or may be executed by a trained machine learning model (in particular, a deep learning model) which has learned mutual relationships of input information in advance. In the illustrated example, a single item of information such as name or address is assumed as an information unit, while an information unit may also be set as a form in which a plurality of items of information are integrated or intentionally included, such as a form in which kinship is further included in a plurality of pieces of human information such as father and mother, or a form in which gender and kinship are integrated, such as nephew. In any case, the above-mentioned reliability indicator is derived for each information unit.

Next, FIG. 8 shows an example in which certificate documents, for example, family register certificate documents of the subject user, have been supplemented. After the additional supplementation, determination of the certificate documents is carried out, and additional reliability determination is executed on the basis of the result of the determination. The determination of the certificate documents and the additional reliability determination may also be executed in accordance with a specific determination program, or may be executed by a trained machine learning model, in particular a deep learning model, which has learned mutual relationships of input information in advance. In FIG. 8, since family register certificate documents have been submitted and relationships with other information units accordingly change, information such as the name, date of birth, parents, and children is given the highest rank A, and information such as the address, mail address, photograph, mail content, and message of the subject user is also given the second information reliability rank B. The submitted certificate documents may be included in the initial input information, or may be submitted on another occasion, for example, after a certain amount of time has elapsed. Still another certificate document may be submitted simultaneously or separately. The additional reliability determination based on the above-mentioned certificate documents is executed after the submission in any case.

Thereafter, the pieces of input information 1a, 2a, and 3a are compared with existing human information, hereinafter referred to as existing information, such as other input information already recorded (information such as human information previously input by the current user and human information already input by another user different from the current user) and integrated information already generated, whereby consistency between the current new information and the existing information is confirmed by information consistency confirmation processing. At this time, after the presence or absence of consistency across the entirety of the current new information and the existing information is confirmed, comprehensive reliability determination is carried out according to the confirmation result. Here, when the existence of the current input information 1a, 2a, and 3a affects the information reliability of the existing information, the reliability indicator of the existing information is also changed. FIG. 8 shows changes in the information reliability ranks, which are reliability indicators for the respective information units after the information consistency confirmation processing. For example, in the illustrated example, as a result of confirmation, through comparison with the existing information, of consistency of the address of the subject user, the information reliability rank for the address of the subject user is upgraded to A, the information reliability rank for siblings of the subject user is upgraded to B, and the information reliability rank for the photograph of the subject user is upgraded to A. When an information unit in a part of the current new information is confirmed to be inconsistent with existing information, by contrast, the information reliability rank of the relevant information unit in both the new information and the existing information is downgraded.

The above-mentioned information reliability determination processing, whether in the form of basic reliability determination, additional reliability determination, or comprehensive reliability determination, is executed at appropriate timing through newly input human information or additional submission of certificate documents and the like, and the reliability indicator for each information unit is derived. The processing procedure shown in FIG. 2 is merely an example, and the above-mentioned processes may be executed in any appropriate order different from the illustrated order, as necessary.

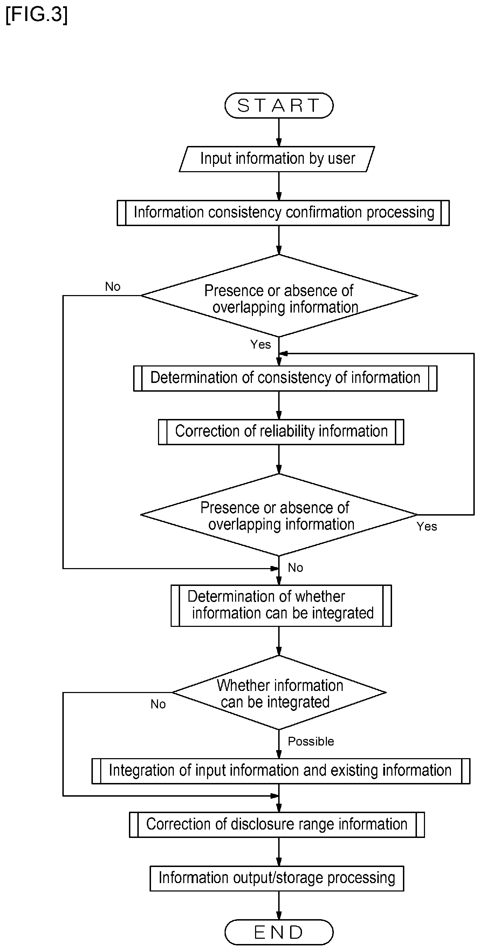

FIG. 3 is a schematic flowchart showing an example of a procedure of processing for integrating, into existing information, the current new information, which is the input information 1a, 2a, and 3a, by the above-mentioned integrated information generation means 123. The above-mentioned input information 1a, 2a, and 3a is recorded in the recording section 131 via the DB server for each user who has input information by the input information recording means 121 of the AP server 12. On the other hand, individual pieces of input information 1a, 2a, and 3a may include mutually overlapping information, and in such a case, integrated information configured as a series of information can be constituted by integrating the plurality of pieces of input information including the overlapping information. The integration processing first performs processing similar to the above-mentioned information consistency confirmation processing in that the input information and the existing information are compared and consistency is confirmed. For the consistency confirmation, results obtained by the above-mentioned information consistency confirmation processing shown in FIG. 2 may be used, or conversely results of the information consistency confirmation processing carried out in the integration processing may be used in the procedural example shown in FIG. 2 in place of the above-mentioned information consistency confirmation processing.

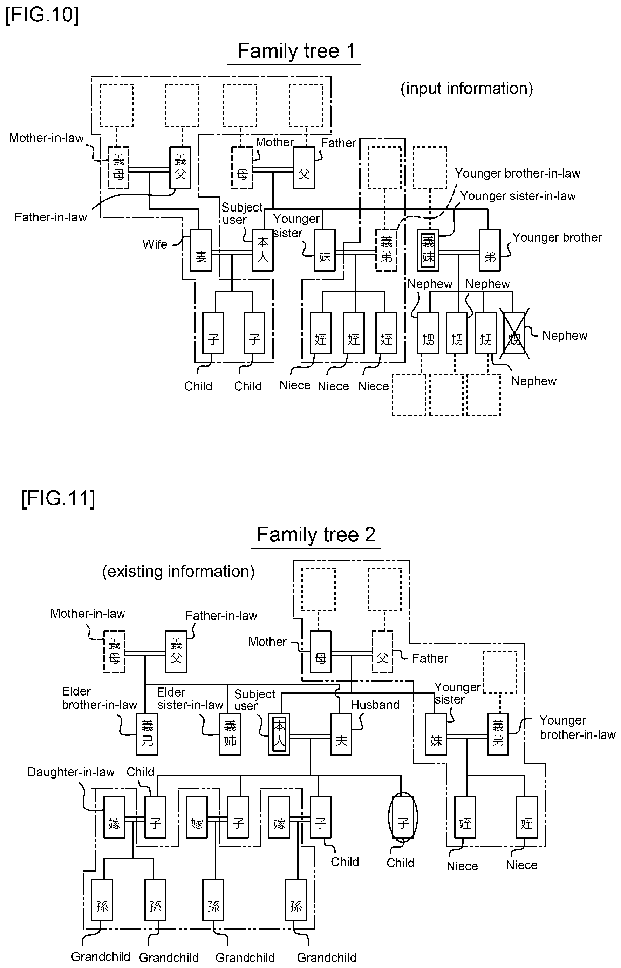

An example of the above-mentioned integration processing will be described for family tree information with reference to FIGS. 10 and 11. For example, a family tree 1 shown in FIG. 10 and a family tree 2 shown in FIG. 11 each include pedigree information centered on the subject user who has input the information. Here, portions indicated by dotted lines in the drawings are portions for which description is omitted, and broken lines in the drawings indicate that the relevant person is currently deceased. The schematic flowchart shown in FIG. 3 assumes a case in which input information is integrated into a part of existing information. Accordingly, assume that the family tree 1 shown in FIG. 10 is input information and the family tree 2 shown in FIG. 11 is a part of existing information. At this time, the subject of the family tree 2 is the younger sister-in-law, shown by a double frame, who is the spouse (wife) of the younger brother of the subject user who has input the family tree 1. Accordingly, the family tree 1 and the family tree 2 include mutually overlapping information (common information). On the other hand, the family tree 1 and the family tree 2 each include some information (non-common information) which is not included in the other family tree. For example, in the family tree 1, pedigree portions in ranges surrounded by alternate long and short dash lines in the drawing (there are two portions in FIG. 10) are information (non-common information) which is not present in the family tree 2. Further, in the family tree 2, pedigree portions in ranges surrounded by double alternate long and short dash lines in the drawing (there are two portions in FIG. 11) are information (non-common information) which is not present in the family tree 1.

In the present example, since consistency is ensured among the common information other than the portions surrounded by the illustrated alternate long and short dash lines and the illustrated double alternate long and short dash lines, the common information is left as it is, and integrated information is generated by connecting, to the common information, the range surrounded by the alternate long and short dash lines in FIG. 10 and the range surrounded by the double alternate long and short dash lines in FIG. 11 as non-common information.

By contrast, when a case is assumed in which information on a fourth nephew marked with an x mark in FIG. 10 is missing in the family tree 1, the family tree 1, in which one of the nephews is missing, is inconsistent with the family tree 2, which has information on a fourth child marked with a circle mark corresponding thereto, and therefore an information unit lacking consistency exists in a part of the above-mentioned common information. At this time, with respect to points other than presence or absence of the fourth nephew and the fourth child, integrated information can be generated, as described above, by connecting non-common information, which is a pedigree portion not present in the other family tree, to the common information, and both pieces of information can be recorded, namely absence of the fourth nephew for user 1 in the family tree 1 and presence of the fourth child for user 2 (the younger sister-in-law of user 1) in the family tree 2.

On the other hand, when information reliability has already been evaluated for the family tree 1 and the family tree 2, the generation method of the integrated information can also be changed according to which information has higher reliability in the family tree 1 and the family tree 2. For example, no reliability indicator exists for absence of the fourth nephew in the family tree 1. Therefore, when the information reliability rank of the reliability indicator of other nephews is X1 and the information reliability rank of presence of the fourth child in the family tree 2 is X2, and when X1 and X2 are close and the difference in the number of ranks is small, for example 2 or less, both pieces of information are recorded (shown together) as described above, namely absence of the fourth nephew for user 1 in the family tree 1 and presence of the fourth child for user 2 (the younger sister-in-law of user 1) in the family tree 2. On the other hand, when the above-mentioned rank of the one having the higher reliability indicator is high, for example A or B, or when the difference in the above-mentioned number of ranks between the reliability indicators of both pieces of information is large, for example 3 or more, a method can be adopted in which information having the higher reliability indicator is reflected in the integrated information.

In the present example, absence in the family tree 1 corresponds to presence in the family tree 2. Therefore, the reliability indicator of other nephews, which in the family tree 1 is regarded as equivalent to absence in relation to the subject user, is used as a comparison target. When presence in the family tree 1 (nephew) and presence in the family tree 2 (child) relate to a person having different attributes, for example when the nephew is male in the family tree 1 while the child is female (daughter) in the family tree 2, the same processing as above may be performed by directly using both reliability indicators as comparison targets. Further, in the above-mentioned example, a case has been described in which presence or absence of a certain person is inconsistent, while, even when an interpersonal relationship such as kinship between the subject user and a certain person is different, for example, even when the name is the same while the kinship differs between nephew and cousin, the reliability indicator for the interpersonal relationship may be considered in the same manner as described above.

When there is a plurality of pieces of overlapping information, the above-mentioned determination and modification of reliability information are executed for each piece of overlapping information and are repeatedly executed until no overlapping information remains. When processing for all pieces of overlapping information is completed, determination is made for the input information as to whether integration processing with the existing information is possible, for example, whether the above-mentioned common information exists and whether the above-mentioned non-common information exists. When the common information and the non-common information exist and the integration processing is possible, generation processing of integrated information is executed as described above. When the above-mentioned integration processing is completed, and when the integration processing is impossible since no overlapping information exists, output of the information is performed after modification of disclosure range information is carried out for the input information and the existing information, and storage processing is performed by the DB server 13.

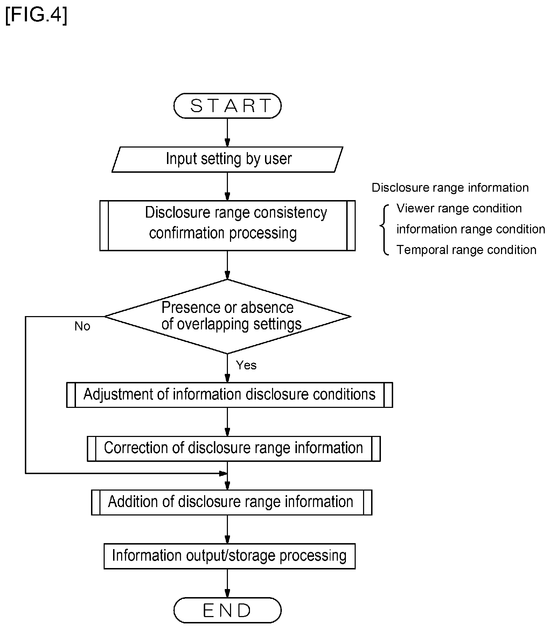

FIG. 4 is a schematic flowchart showing an example of a procedure of processing for setting a disclosure range of input information by the above-mentioned disclosure range setting means 125. The processing starts with the disclosure range of the input information by the user being set by input operations 1d, 2d, and 3d. The disclosure range setting means 125 prompts the user terminals 1-3, via the WEB server 11, to perform a setting operation for the disclosure range of the input information. In response, when the input operations 1d, 2d, and 3d are performed on the user terminals 1-3, the AP server 12 sets the disclosure range via the WEB server 11. Here, the disclosure range includes three kinds of ranges, namely a viewer range, an information range, and a temporal range. Namely, the disclosure range information included in the above-mentioned disclosure range information group DB5 specifically defines, respectively, a viewer range condition for persons to whom disclosure is made, an information range condition for information to be disclosed, and a temporal range condition for disclosure timing.

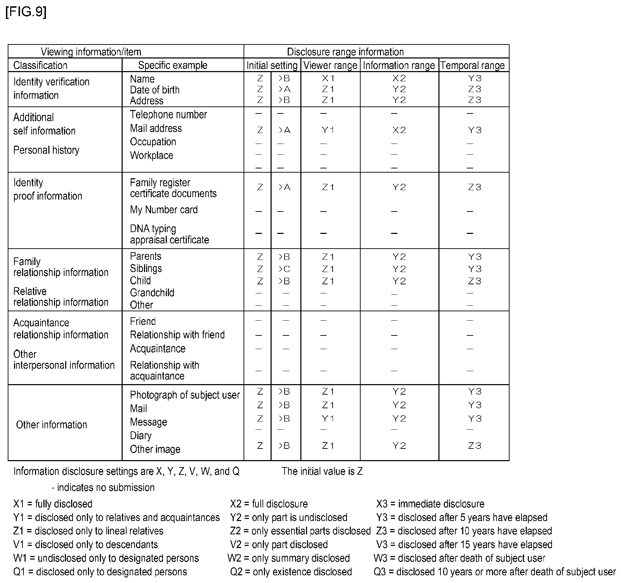

FIG. 9 shows an example of settings of a disclosure range for each information unit relating to the family tree 1, which is input information. Here, contents of the classifications and the specific examples in viewing information/items are the same as those shown in FIG. 8. In the present example, as setting contents of the disclosure range, six ranks X, Y, Z, V, W, and Q are defined in order from stricter disclosure conditions. More specifically, with respect to the viewer range, there are six ranks X1, Y1, Z1, V1, W1, and Q1; with respect to the information range, there are six ranks X2, Y2, Z2, V2, W2, and Q2; and with respect to the temporal range, there are six ranks X3, Y3, Z3, V3, W3, and Q3, and examples of settings of the respective ranks are described in the lower margin outside the table shown in FIG. 9. An example of an initial setting of the disclosure range in the system 10 is Z, which indicates that the viewer range is Z1, the information range is Z2, and the temporal range is Z3. Further, in the setting of the disclosure range, it is also possible to use, as a prerequisite condition for disclosure, a condition that the above-mentioned reliability indicator is high to a certain extent. Namely, with respect to the disclosed information for viewing, when the reliability indicator for each information unit is not high, reliability of the system 10 itself is impaired, and therefore an information unit is not included in the disclosed information unless the information unit has at least a minimum reliability indicator. In the illustrated example, information units which are not disclosed unless the information reliability rank is A or higher are set as the date of birth, mail address, family register certificate documents, and the like of the subject user, and information units which are not disclosed unless the information reliability rank is B or higher are set as the name, address, parents, children, and the like of the subject user. Here, when a disclosure restriction is provided for the information reliability rank, the system administrator may be allowed to choose not to add display of the reliability indicator for each information unit in the disclosed information for viewing. The above-mentioned settings are merely initial settings of the system 10, and it is preferable to allow individual changes by the subject user. FIG. 9 shows an example set by the subject user for each of the disclosure ranges, namely the viewer range, the information range, and the temporal range. Further, setting of the information reliability rank may also be made possible by the subject user, while the initial setting value may be fixed or only the administrator of the system 10 may be allowed to change the initial setting value.

Next, description will be continued with reference again to FIG. 4. When the disclosure range of the input information 1a, 2a, and 3a is set as described above, disclosure range consistency confirmation processing is executed for confirming consistency with the disclosure range of existing information. In the processing, it is confirmed whether the input information and the existing information overlap and, moreover, whether respective disclosure ranges are set for the overlapping portions, namely whether overlapping settings are present or absent. As a result, when overlapping settings are present, information disclosure conditions are adjusted. For example, in the input information of the family tree 1, since the subject user sets the disclosure range, namely the viewer range, the information range, and the temporal range, setting of the disclosure range by the subject user is used for a portion, among the input information, which is included only in the family tree 1 and is surrounded by the illustrated alternate long and short dash lines (covered common information). On the other hand, in the existing information of the family tree 2, since there is a setting of the disclosure range input by the younger sister-in-law of the subject user, setting of the disclosure range by the younger sister-in-law is used for a portion which is included only in the family tree 2 and is surrounded by the illustrated double alternate long and short dash lines (non-common information). For common information of the family tree 1 and the family tree 2, no problem arises when the disclosure range setting by the subject user and the disclosure range setting by the younger sister-in-law are the same, while when the disclosure range settings differ from each other, adjustment of the mutually different setting contents of both parties is necessary.

As a method for adjusting the information disclosure conditions, a method can be used in which the settings of both parties are unified to the setting having stricter disclosure conditions. For example, when the rank of the viewer range for parents in the family tree 1 is Z1 (disclosed only to lineal relatives) and the rank of the viewer range for parents-in-law in the family tree 2 is Y1 (disclosed only to relatives and acquaintances), the viewer range of the relevant parents is set to Z1. Other examples of the adjustment method include a method of setting a value at an intermediate point among the respective ranks of the disclosure range for information units for which overlapping settings are made, and a method of unifying settings to a setting value which gives higher priority to disclosure. In any method, when the above-mentioned adjustment processing is carried out, disclosure range information of the existing information is corrected.

Thereafter, when the above-mentioned adjustment processing is absent, the currently input disclosure range is added as it is as disclosure range information corresponding to the new input information, and when the above-mentioned adjustment processing is present, a disclosure range obtained by changing the adjusted disclosure range is added as disclosure range information corresponding to the new input information. Thereafter, the above-mentioned information is output and recorded in the recording section 131 by the DB server 13. The disclosure range information for each piece of input information may be left as the disclosure condition input setting by the user, and the integrated information obtained by the integration processing may be set to the common disclosure range for each information unit as a result of the adjustment described above. In either case, the disclosure range information for each information unit is stored in a state in which the disclosure range information is respectively associated with the corresponding information unit.

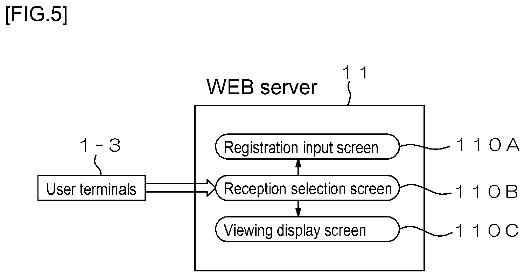

Next, with reference to FIGS. 5 to 7, description will be given of a reception function for the user terminals 1-3 via the WEB server 11 of the system 10 and a user reception means which cooperates with the input information recording means 121, the information reliability evaluation means 122, the integrated information generation means 123, the viewing information disclosure means 124, and the disclosure range setting means 125. The user reception means is constituted by the above-mentioned WEB server 11 and the AP server 12.

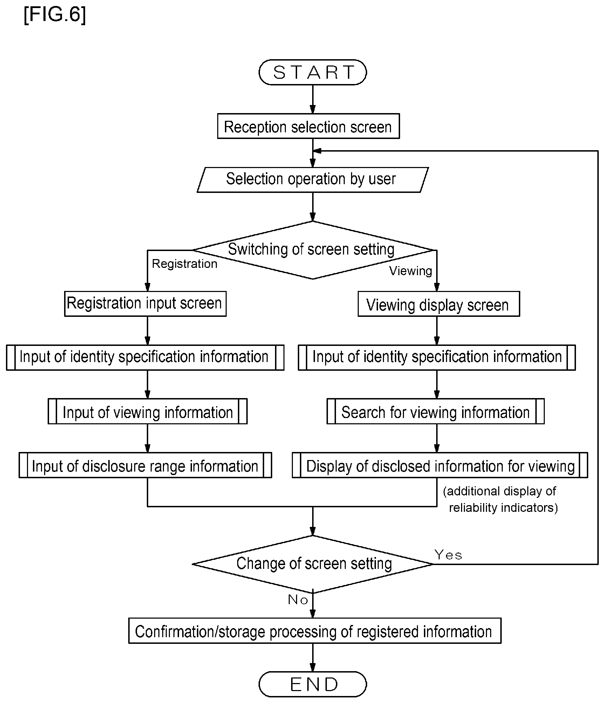

FIG. 5 is an explanatory diagram showing a configuration of a specific reception screen of the above-mentioned user reception means, and FIG. 6 is a schematic flowchart showing an example of a reception procedure for a user. When connection is made from a user terminal 1-3 to the WEB server 11 via the Internet, a reception selection screen 110A is displayed. The reception selection screen 110A is configured such that the user can select transition to a registration input screen 110B and transition to a viewing display screen 110C. The registration input screen 110B is a display screen for an accessing user to input information on the subject user and related persons. On the registration input screen 110B, the user first inputs identity specification information and carries out confirmation processing as to whether the user is the subject user. Thereafter, viewing information other than the identity specification information is input. The information thus input becomes the above-mentioned input information 1a, 2a, and 3a. Further, lastly, disclosure range information indicating a disclosure range relating to the input information already input is input. Instead of inputting the identity specification information, pre-registered account information such as an ID and a password may be input when the account information exists.

On the other hand, the viewing display screen 110C is a display screen for an accessing user to view human information relating to the subject user. On the viewing display screen 110C, the user first inputs identity specification information and carries out confirmation processing as to whether the user is the subject user. Thereafter, the user searches for viewing information, and one or a plurality of items of disclosed information for viewing which are viewable by the user are displayed according to a result of the search. When the user selects any one item, disclosed information for viewing corresponding to the selected item is displayed. When input information is recorded after identity verification, account information such as an ID and a password of the user can be issued or registered as identity specification information. Thereafter, confirmation processing of the subject user may be carried out by the issued or registered account information such as the ID and the password. Here, display of the disclosed information for viewing may be carried out in a mode accompanied by reliability indicators associated for each information unit as described above (additional display of reliability indicators). With such a configuration, a viewer can know a degree of reliability of the information unit of the disclosed information for viewing, and occurrence of problems due to erroneous information can therefore be suppressed. For the reliability indicators, it is desirable to configure the system such that the system administrator can set whether display of the reliability indicators added to the information units is to be performed.

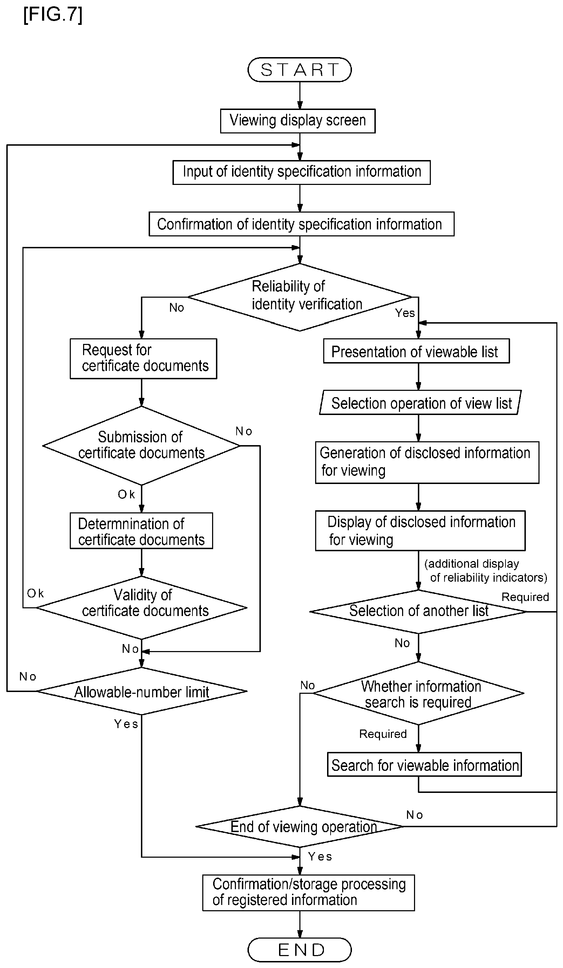

FIG. 7 is a schematic flowchart showing an example of a procedure at a time of viewing the disclosed information for viewing by the viewing information disclosure means 124. As described above, input processing and confirmation processing of identity specification information are first executed, and when reliability of identity verification is not established, submission of certificate documents is requested and validity of the submitted certificate documents is judged by determination of the submitted certificate documents. Then, reliability of the identity verification is further determined, and the determination may be repeated until the reliability is recognized. Provided that viewing is not possible when the reliability is not recognized even when a limit number of times is reached. When the user as a viewer is a person who has input human information in the past and the above-mentioned account information is registered, the identity confirmation processing for the viewer may also be configured to be executable by the account information.

When identity confirmation processing is correctly carried out, a viewable list corresponding to the identity specification information is presented. When a selection operation is performed on the viewable list, corresponding disclosed information for viewing is generated and displayed on the screen. Further, when a search for viewable information is carried out by the user, a corresponding viewable list is presented, and display of disclosed information for viewing is carried out in the same manner as described above. Additional display of the reliability indicators is the same as the above-mentioned description with reference to FIG. 6.

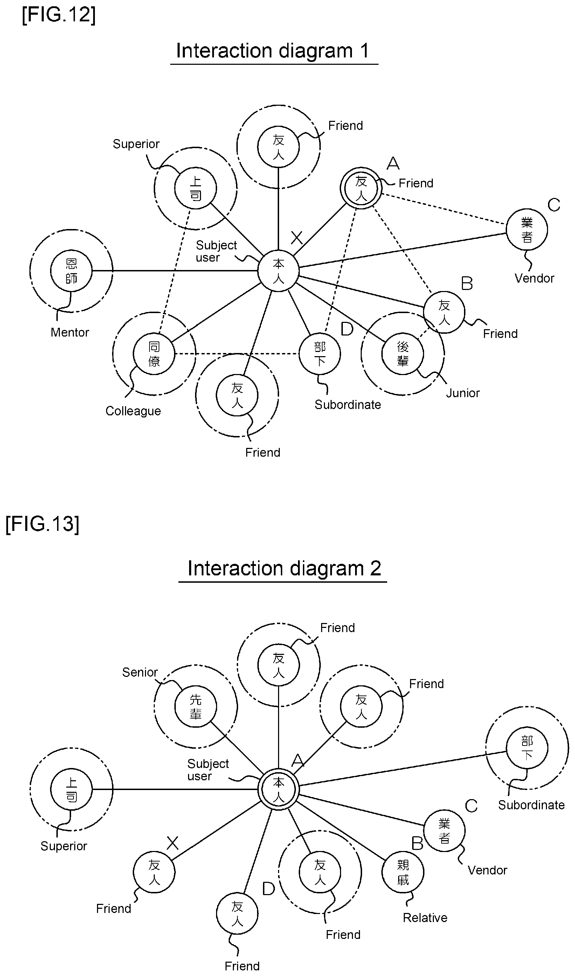

The human information of the system 10 described above also includes human relationship diagrams indicating various interaction relationships, such as an interaction diagram 1 and an interaction diagram 2 shown in FIGS. 12 and 13. In the illustrated interaction diagrams, examples include various interaction relationships other than kinship (blood relationship) relationships such as the previously described family tree, for example, friends, colleagues, superiors, and subordinates at a workplace, business transaction relationships, and various acquaintances in school relationships such as classmates, seniors, and juniors, and identifying information of the acquaintances and relationships of the subject user with the acquaintances are recorded.

In the interaction diagram 1 shown in FIG. 12, user X is the subject user, and friend A and B of user X, vendor C having a transaction relationship, subordinate D at work, and the like are displayed. Further, in the interaction diagram 2 shown in FIG. 13, the above-mentioned friend A is the subject user, and, in relation to user A, friend X, relative B, vendor C, and friend D are cited as persons included in common information with the above-mentioned interaction diagram 1. Here, persons concerned surrounded by the alternate long and short dash lines in the interaction diagram 1 are an interaction relationship portion (non-common information) not included in the interaction diagram 2, and persons concerned surrounded by the double alternate long and short dash lines in the interaction diagram 2 are an interaction relationship portion (non-common information) not included in the interaction diagram 1. Input information relating to the interaction diagram 1 and the interaction diagram 2 is recorded in the same manner as the family tree 1 (FIG. 10) and the family tree 2 (FIG. 11) and is integrated in the same manner. Furthermore, although illustration is particularly omitted, for portions lacking consistency as described above, the same processing as described above is carried out for integrated information. Here, even among different kinds of information which are both human relationship diagrams, such as family trees and interaction diagrams, integration can be performed, in a relationship of common information and non-common information, in the same manner as between the above-mentioned family trees or between the above-mentioned interaction diagrams.

As described above, the human information management system according to the present embodiment includes the input information recording means 121 which records human information input by the user as input information 1a, 2a, and 3a, the information reliability evaluation means 122 which evaluates reliability of the input information 1a, 2a, and 3a for each information unit and derives a reliability indicator associated with the corresponding information unit, and the viewing information disclosure means 124 which discloses, to the user, disclosed information for viewing formed on the basis of the input information 1a, 2a, and 3a or integrated information generated by integrating a plurality of pieces of input information.

Accordingly, management of the input information and the integrated information can be carried out on the basis of the reliability indicator associated with each information unit of the input information, and occurrence of problems due to erroneous information can therefore be suppressed without hindering broadening of the range of human information to be provided.

In the present embodiment, the information reliability evaluation means 122 can objectively evaluate reliability of information for each information unit by setting the level of the reliability indicator according to the degree of consistency of the corresponding information unit with other information units in the input information 1a, 2a, and 3a and with existing human information, or according to existence of certificate documents by which the corresponding information unit is proved by a third party.

Here, when a part of the input information 1a, 2a, and 3a is inconsistent with existing human information, the information reliability evaluation means 122 lowers the reliability indicator of the part, and when the part is consistent with the existing human information, the information reliability evaluation means 122 raises the reliability indicator of the part. Accordingly, reliability evaluation according to mutual consistency of input information from a plurality of users can be carried out, and reliability of information can be evaluated objectively and easily.

Further, when a part of the input information 1a, 2a, and 3a is proved by submitted certificate documents by a third party, the information reliability evaluation means 122 raises the reliability indicator of the part, whereby reliability of information can be evaluated objectively and reliably.

Further, the viewing information disclosure means 124 preferably forms disclosed information for viewing with the reliability indicator added on the basis of the input information 1a, 2a, and 3a or the integrated information. According to such a configuration, since the disclosed information for viewing is formed with the reliability indicator added, namely with additional display of the reliability indicator, a viewer can view an information unit while checking the reliability indicator, and influence of erroneous information on the viewer can therefore be reduced.

Further, the viewing information disclosure means 124 preferably forms disclosed information for viewing by selecting or limiting the input information 1a, 2a, and 3a or the integrated information for each information unit according to the level of the reliability indicator. According to such a configuration, the disclosed information for viewing is formed by selecting or limiting the above-mentioned input information or the above-mentioned integrated information for each information unit according to the level of the reliability indicator, and reliability of the disclosed information for viewing is therefore improved overall, whereby a decrease in reliability of the system can be prevented.

Next, in the present embodiment, further provision of the integrated information generation means which generates integrated information from the plurality of pieces of input information 1a, 2a, and 3a makes it possible to configure a high-value human information source broadly related through integration of input information from a plurality of users.

In particular, when a part of the input information 1a, 2a, and 3a matches the existing human information and non-common information having no mutually corresponding data portion exists in the remaining part, the integrated information is generated in a mode including the non-common information in addition to the part, whereby a high-value information group can be configured by relating the plurality of pieces of input information. Further, in the integrated information, when a part of the input information 1a, 2a, and 3a does not match existing human information, the part and a corresponding portion of the existing human information coexist, whereby management can be carried out in a mode in which reliability of information can easily be maintained while maintaining broadening of human information.

Here, since the integrated information is generated by selecting or limiting and integrating the input information 1a, 2a, and 3a for each information unit according to the level of the reliability indicator, reliability of the integrated information can be improved.

In this case, in the integrated information, when a part of the input information 1a, 2a, and 3a does not match existing human information, the reliability indicator of the part is compared with the reliability indicator of a corresponding portion of the existing human information. When the difference in the level of the reliability indicator is equal to or greater than a threshold, only the one having the higher reliability indicator is retained, and when the difference is less than the threshold, the part and the corresponding portion coexist. Accordingly, both broadening of human information and ensuring of reliability can be achieved.

Next, the information reliability evaluation means 122 defines, as the reliability indicator, the plurality of information reliability ranks A-G ranging from high reliability to low reliability, and uses D, which is one of the intermediate ranks B-F excluding the highest rank A and the lowest rank G among the plurality of information reliability ranks, as an initial value of the information reliability rank. Accordingly, a suitable reliability indicator can be set by subsequent determination processing such as basic reliability determination, additive reliability determination, and comprehensive reliability determination.

Next, the viewing information disclosure means 124 can realize system operation respecting a disclosure intention of the user by restricting a disclosure range of the input information 1a, 2a, and 3a according to an operation by the user. Further, the disclosure range is desirably set for each of a range of viewers to whom disclosure is made, a range of information which becomes disclosure content, and a temporal range which becomes a disclosure period. Furthermore, when parts of input information from a plurality of users match each other, the disclosure range of the parts is desirably determined by adjustment according to relationships among settings of the disclosure range for the respective users. At this time, adjustment of the disclosure range of the parts may result in selection of the strictest disclosure range condition among setting conditions of the plurality of users, and may also result in selection of an intermediate disclosure range condition among setting conditions of the plurality of users.

Next, the human information management system further includes the long-term data management unit 15 having the plurality of recording sections 151-153 for recording the input information 1a, 2a, and 3a or the integrated information, the plurality of recording sections 151-153 being constituted by a plurality of kinds of mutually different storage media and including at least the first recording section 151, which is more suitable for recording changes than other recording sections, and the second recording section 153, which is more suitable for long-term storage than other recording sections. The long-term data management unit 15 records record data of information units having low reliability indicators in the first recording section 151 and records record data of information units having high reliability indicators in the second recording section 153. Accordingly, storage can be distributed to recording sections suitable for handling according to higher or lower reliability, management efficiency can be improved, and reliable long-term data storage can easily be realized.

The human information management system according to the present invention is not limited only to the above-mentioned illustrated examples, and various modifications can of course be made within a range not departing from the scope of the present invention. For example, in the above-mentioned embodiments, the BU server 14 and the long-term data management unit 15 are provided separately from the DB server 13, while a configuration in which the long-term data management unit 15 is incorporated in the DB server 13 may be adopted, and the present invention is not limited to the specific configuration, and any configuration may be adopted which achieves equivalent functions as a result. Further, as a mode in which the reliability indicator is associated with an information unit of the input information or the integrated information, a configuration including link information which associates both with each other as described above is not the only possible configuration, and a mode may also be adopted in which the information unit and the reliability indicator are simply included in the same data configuration.

The illustrated examples and examples of the reliability indicator shown in the above-mentioned embodiment are merely examples, and appropriate changes can be made according to requests of users, administrators, and others. For example, as the reliability indicator, not only letters and symbols but also representations expressed by numerical values, marks, and the like can be used, and any form may be used which makes it possible to grasp the degree of reliability as a result. Further, the disclosure range is not particularly limited either. For example, various conditions can be used for setting, such as disclosure when a descendant reaches a specific age, for example, 20 years old, disclosure at a point in time when a descendant acquires a specific qualification, for example, lawyer, and disclosure when a descendant falls under a specific situation, for example, when the descendant becomes ill.

### Reference Signs List

1,2,3 ... user terminals; 1a,2a,3a ... input information; 1b,2b,3b ... input operations (for viewing disclosed information); 1c,2c,3c ... output data; 1d,2d,3d ... input operations (for setting disclosure ranges); 10 ... human information management system; 11 ... WEB server; 12 ... AP server; 121 ... input information recording means; 122 ... information reliability evaluation means; 123 ... integrated information generation means; 124 ... viewing information disclosure means; 125 ... disclosure range setting means; 13 ... DB server; 14 ... BU server; 15 ... long-term data management unit; A-G ... information reliability ranks (reliability indicators)

## Claims

1. A human information management system comprising:
an input information recording means which records human information input by a user as input information;
an information reliability evaluation means which evaluates reliability of the input information for each information unit and drives a reliability indicator associated with the corresponding information unit; and
a viewing information disclosure means which discloses, to the user, disclosed information for viewing formed from the input information or from integrated information generated by integrating a plurality of pieces of the input information.

2. The human information management system according to claim 1, wherein
the information reliability evaluation means sets the level of the reliability indicator according to the degree of consistency of the corresponding information unit with other information units in the input information and with the existing human information.

3. The human information management system according to claim2, wherein
the information reliability evaluation means lowers the reliability indicator of a part when the part of the input information does not match the existing human information, and the information reliability evaluation means raises the reliability indicator of the part when the part matches the existing human information.

4. The human information management system according to claim3, wherein
the information reliability evaluation means raises the reliability indicator of a part when the part of the input information is proved by certification documents by a third party which have been submitted.

5. The human information management system according to one of claims 1-4, wherein
the viewing information disclosure means forms the disclosed information for viewing with the reliability indicator added on the basis of the input information or the integrated information.

6. The human information management system according to one of claims 1-4, wherein
the viewing information disclosure means forms the disclosed information for viewing by selecting or limiting the input information or the integrated information for each of the information unit according to the level of the reliability indicator.

7. The human information management system according to one of claims 1-4, further comprising:
an integrated information generation means which generates the integrated information from a plurality of pieces of the input information, wherein
the integrated information generated by selecting or limiting and integrating and integrated the input information for each of the information unit according to the level of the reliability indicator.

8. The human information management system according to claim 7, wherein
in the integrated information, the reliability indicator of a part and the reliability indicator of a corresponding part of the existing human information are compared when the part of the input information does not match the existing human information, only the one having the higher reliability indicator is retained when the difference in level of the reliability indicator is equal to or greater than the threshold, and the part and the corresponding part coexist when the difference is less than the threshold.

9. The human information management system according to one of claims 1-4, wherein
the information reliability evaluation means defines, as the reliability indicator, a plurality of information reliability ranks ranging from high reliability to low reliability, and uses one of intermediate ranks excluding the highest rank and the lowest rank among the plurality of information reliability ranks as an initial value of the information reliability ranks.

10. The human information management system according to one of claims 1-4, further comprising:
a long-term data management unit having a plurality of recording sections for recording the input information or the integrated information, the long-term data management unit being composed of a plurality of mutually different types of storage media and including at least a first recording section which is more suitable for recording changes than other recording sections and a second recording section which is more suitable for long-term storage than other recording sections, wherein
the long-term data management unit records the record data of information units having low reliability indicators in the first recording section and records the record data of information units having high reliability indicators in the second recording section.
